(19) **Europäisches Patentamt** / **European Patent Office** / **Office européen des brevets**

(11) **EP 4 560 031 A1**

(12) **EUROPEAN PATENT APPLICATION**
published in accordance with Art. 153(4) EPC

(43) Date of publication:
**28.05.2025 Bulletin 2025/22**

(21) Application number: **23862713.7**

(22) Date of filing: **22.05.2023**

(51) International Patent Classification (IPC):
*C21D 8/02* [(2006.01)]  *C22C 38/00* [(2006.01)]
*C22C 38/06* [(2006.01)]  *C22C 38/58* [(2006.01)]
*B21B 1/22* [(2006.01)]  *B21C 37/08* [(2006.01)]
*B21C 37/30* [(2006.01)]

(52) Cooperative Patent Classification (CPC):
**B21B 1/22; B21C 37/08; B21C 37/30; C21D 8/02;
C22C 38/00; C22C 38/06; C22C 38/58**

(86) International application number:
**PCT/JP2023/019003**

(87) International publication number:
**WO 2024/053168 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.09.2022 JP 2022144157**

(71) Applicant: **JFE Steel Corporation
Tokyo 100-0011 (JP)**

(72) Inventors:
• **MATSUMOTO Akihide
Tokyo 100-0011 (JP)**
• **IDE Shinsuke
Tokyo 100-0011 (JP)**

(74) Representative: **Hoffmann Eitle
Patent- und Rechtsanwälte PartmbB
Arabellastraße 30
81925 München (DE)**

(54) **ELECTRIC RESISTANCE WELDED PIPE AND METHOD FOR MANUFACTURING SAME**

(57)     Provided is a high-strength electric resistance welded steel pipe or tube having excellent SSC resistance. An absolute value of circumferential residual stress on a pipe or tube inner surface of the electric resistance welded steel pipe or tube is 10 MPa or more, and an absolute value of shear residual stress on the pipe or tube inner surface is 300 MPa or less. In a steel microstructure at a wall thickness center of a base metal portion of the electric resistance welded steel pipe or tube, a total volume fraction of ferrite and bainite is 90 % or more and an average crystal grain size is 9.0 $\mu$m or less. In a steel microstructure at a position 0.1 mm radially outward from the pipe or tube inner surface of the base metal portion, a total volume fraction of ferrite and bainite is 95 % or more.

EP 4 560 031 A1

**Description**

TECHNICAL FIELD

The present disclosure relates to a high-strength electric resistance welded steel pipe or tube suitable for use in line pipes and the like and a production method therefor.

BACKGROUND

Steel pipes or tubes for line pipes used in long-distance transportation of crude oil, natural gas, etc. are required to have high strength in order to improve transportation efficiency by increasing the pressure of the internal fluid.

Steel pipes or tubes for line pipes are also required to have high sulfide stress corrosion cracking (SSC) resistance because their inner surface comes into contact with highly corrosive fluids containing hydrogen sulfide.

Typically, a steel material with higher strength has lower SSC resistance. For steel pipes or tubes for line pipes in particular, it is important to reduce the hardness (strength) of the inner surface of the steel pipe or tube that comes into contact with the fluid in order to ensure SSC resistance.

Thermo-mechanical control process (TMCP) technology, which combines controlled rolling and accelerated cooling, is normally used in the production of hot-rolled steel sheets for high-strength steel pipes or tubes. The use of TMCP technology can refine the steel microstructure and strengthen the steel material.

In TMCP technology, it is important to increase the cooling rate during accelerated cooling. However, since the cooling rate is higher at the surface of the steel sheet than inside the steel sheet, the hardness of the surface of the steel sheet increases excessively. This hinders using steel sheets produced by TMCP technology for line pipes from the viewpoint of SSC resistance.

In order to address this problem, for example, JP 6521197 B2 (PTL 1) and JP 2017-179482 A (PTL 2) each propose a steel pipe or tube with controlled surface hardness.

CITATION LIST

Patent Literature

PTL 1: JP 6521197 B2
PTL 2: JP 2017-179482 A

SUMMARY

(Technical Problem)

However, even if the hardness of the surface of the steel pipe or tube is controlled as described in PTL 1 and PTL 2, sufficient SSC resistance cannot be obtained in some cases. Further improvement in SSC resistance is thus needed.

It could therefore be helpful to provide a high-strength electric resistance welded steel pipe or tube having excellent SSC resistance and a production method therefor.

In the present disclosure, "high-strength" means that the yield stress in the base metal portion of the electric resistance welded steel pipe or tube is 400 MPa or more in the below-described tensile test.

In the present disclosure, "excellent SSC resistance" means that, in the below-described four-point bending corrosion test, no cracks occur in the base metal portion of the electric resistance welded steel pipe or tube, the depth of pitting corrosion which occurs (maximum pitting depth) is less than 250 $\mu$m, and the maximum value of the depth/width of the pitting corrosion (maximum pitting depth/width ratio) is less than 3.0.

These tests can be carried out by the methods described in the EXAMPLES section below.

(Solution to Problem)

Upon careful examination, we discovered that SSC resistance can be improved by appropriately controlling the shear residual stress on the surface of the steel pipe or tube.

In the present disclosure, "high shear residual stress" means that the absolute value of shear residual stress is large, and "low shear residual stress" means that the absolute value of shear residual stress is small.

Since multiplication of crystal dislocations in a steel pipe or tube is caused by shear stress, if shear residual stress is high, multiplication of dislocations is promoted when stress is applied. Accordingly, in a line pipe using a steel pipe or tube whose surface has high shear residual stress, the dislocation density near the surface increases due to pressure during operation. Consequently, the hardness of the surface of the steel pipe or tube increases and SSC resistance decreases.

Hence, we discovered that the SSC resistance of a steel pipe or tube can be improved by lowering the shear residual stress on the surface of the steel pipe or tube.

The present disclosure is based on these discoveries.

We thus provide the following.

1. An electric resistance welded steel pipe or tube comprising a base metal portion and an electric resistance weld portion, wherein an absolute value of circumferential residual stress on a pipe or tube inner surface of the electric resistance welded steel pipe or tube is 10 MPa or more, an absolute value of shear residual stress on the pipe or tube inner surface is 300 MPa or less, in a steel microstructure at a wall thickness center of the base metal portion, a total volume fraction of ferrite and bainite is 90 % or more and an average crystal grain size at the wall thickness center is 9.0 μm or less, and in a steel microstructure at a position 0.1 mm radially outward from the pipe or tube inner surface of the base metal portion, a total volume fraction of ferrite and bainite is 95 % or more.

2. The electric resistance welded steel pipe or tube according to 1., wherein a chemical composition of the base metal portion contains (consists of), in mass%, C: 0.020 % or more and 0.150 % or less, Si: 0.01 % or more and 0.50 % or less, Mn: 0.30 % or more and 2.00 % or less, P: 0.050 % or less, S: 0.0200 % or less, Al: 0.005 % or more and 0.100 % or less, and N: 0.0100 % or less, with a balance consisting of Fe and inevitable impurities.

3. The electric resistance welded steel pipe or tube according to 2., wherein the chemical composition further contains, in mass%, one or more selected from Nb: 0.100 % or less, V: 0.100 % or less, Ti: 0.150 % or less, Cr: 1.00 % or less, Mo: 1.00 % or less, Cu: 1.00 % or less, Ni: 1.00 % or less, Ca: 0.0100 % or less, and B: 0.0100 % or less.

4. A production method for the electric resistance welded steel pipe or tube according to any one of 1. to 3., the production method comprising: heating a steel material to a heating temperature of 1100 °C or more and 1300 °C or less and then subjecting the steel material to hot rolling with a rolling finish temperature of 750 °C or more and 850 °C or less; thereafter performing cooling with an average cooling rate at a sheet thickness center of 10 °C/s or more and 60 °C/s or less, a cooling stop temperature at the sheet thickness center of 450 °C or more and 650 °C or less, and a cooling stop temperature at a sheet surface of 250 °C or more and 500 °C or less to obtain a hot-rolled steel sheet; thereafter forming the hot-rolled steel sheet into a cylinder by cold roll forming and butting and electric resistance welding both circumferential ends of the cylinder together; thereafter obtaining an electric resistance welded steel pipe or tube material using a sizing roll that satisfies the following formula (1); and thereafter applying an internal pressure p in MPa that satisfies the following formula (2) to an inner surface of the electric resistance welded steel pipe or tube material to obtain an electric resistance welded steel pipe or tube, (a diameter in mm of the sizing roll) $\geq$ (a sheet thickness in mm of the hot-rolled steel sheet)/0.020 ...          (1)

$$X < p \leq X \times 1.5 \qquad\qquad \dots (2)$$

where X = ((a wall thickness in mm of the electric resistance welded steel pipe or tube material)/(a radius in mm of the electric resistance welded steel pipe or tube material)) $\times$ (a yield stress in MPa of the electric resistance welded steel pipe or tube material).

(Advantageous Effect)

It is thus possible to provide a high-strength electric resistance welded steel pipe or tube having excellent SSC resistance together with an advantageous production method for the high-strength electric resistance welded steel pipe or tube.

DETAILED DESCRIPTION

A high-strength electric resistance welded steel pipe or tube according to the present disclosure is an electric resistance welded steel pipe or tube comprising a base metal portion and an electric resistance weld portion. In the steel microstructure at the wall thickness center of the base metal portion, the total volume fraction of ferrite and bainite is 90 % or more, and the average crystal grain size at the wall thickness center is 9.0 μm or less. In the steel microstructure at a position 0.1 mm radially outward from the pipe or tube inner surface of the base metal portion, the total volume fraction of ferrite and bainite is 95 % or more. Moreover, the absolute value of the circumferential residual stress on the pipe or tube inner surface of the electric resistance welded steel pipe or tube is 10 MPa or more, and the absolute value of the shear residual stress on the pipe or tube inner surface is 300 MPa or less.

The electric resistance welded steel pipe or tube and its production method according to the present disclosure will be described below. The present disclosure is not limited to the embodiments described below. The present disclosure defines the chemical composition and steel microstructure of given parts of the base metal portion of the electric resistance welded steel pipe or tube excluding the electric resistance weld portion and the heat-affected zone. In other words, the chemical composition and steel microstructure are the same at a position 90° away from the electric resistance weld portion and at a position 180° away from the electric resistance weld portion.

In the following description, the term "high-strength electric resistance welded steel pipe or tube" is also simply referred to as "electric resistance welded steel pipe or tube".

Ferrite and bainite are soft microstructures. Pearlite, martensite, and austenite are hard microstructures, and are more likely to form when the cooling rate after hot rolling is higher.

Total volume fraction of ferrite and bainite at wall thickness center of base metal portion: 90 % or more

If the total volume fraction of ferrite and bainite at the wall thickness center of the base metal portion (i.e. position of 1/2 of the thickness of the base metal portion in the steel pipe or tube, hereafter simply referred to as "wall thickness center") is less than 90 %, the volume fraction of hard microstructures in the pipe or tube surface layer is high and SSC resistance decreases.

Since the cooling rate of the steel sheet after hot rolling is higher at the surface of the steel sheet than inside the steel sheet, the proportion of hard microstructures is higher at the surface of the steel sheet than inside the steel sheet. An electric resistance welded steel pipe or tube using the hot-rolled steel sheet having such microstructure has a higher proportion of hard microstructures near the pipe or tube surface than at the wall thickness center.

The total volume fraction of ferrite and bainite at the wall thickness center is preferably 93 % or more. The volume fraction is more preferably 96 % or more. No upper limit is placed on the volume fraction. From the viewpoint of SSC resistance, the volume fraction is desirably as high as possible. However, since it is difficult to completely suppress the formation of residual microstructures, the volume fraction may be 99 % or less.

The residual microstructures at the wall thickness center are one or more of pearlite, martensite, and austenite. If the total volume fraction of these microstructures is more than 10 %, the volume fraction of hard microstructures near the pipe or tube surface layer is high and SSC resistance decreases. Accordingly, the total volume fraction of these microstructures is 10 % or less of the entire steel microstructure at the position. The volume fraction is preferably 7 % or less, and more preferably 4 % or less.

Average crystal grain size at wall thickness center: 9.0 μm or less

The yield stress is higher when the average crystal grain size is smaller. In the present disclosure, the average crystal grain size at the wall thickness center is 9.0 μm or less in order to ensure the desired strength. The average crystal grain size is preferably 8.5 μm or less, and more preferably 8.0 μm or less.

No lower limit is placed on the average crystal grain size. However, since a decrease of the average crystal grain size leads to an increase in dislocation density and a decrease in SSC resistance, the average crystal grain size is preferably 3.0 μm or more.

Total volume fraction of ferrite and bainite at position 0.1 mm radially outward from pipe or tube inner surface of base metal portion: 95 % or more

If a hard microstructure is mixed with ferrite and bainite, stress concentration due to the hardness difference causes shear residual stress at the interface. Thus, if the total volume fraction of ferrite and bainite is low and the volume fraction of hard microstructures is high near the pipe or tube inner surface, SSC resistance decreases. Therefore, the total volume fraction of ferrite and bainite at a position 0.1 mm radially outward (hereafter also simply referred to as "0.1 mm position") from the pipe or tube inner surface of the base metal portion (hereafter referred to as "pipe or tube inner surface") is 95 % or more of the entire steel microstructure at the position. The volume fraction is preferably 96 % or more, and more preferably 97 % or more. No upper limit is placed on the volume fraction. From the viewpoint of SSC resistance, the volume fraction is desirably as high as possible. However, since it is difficult to completely suppress the formation of residual microstructures, the volume fraction may be 99 % or less.

The residual microstructures at the 0.1 mm position are one or more of pearlite, martensite, and austenite. If the total volume fraction of these microstructures is more than 5 %, SSC resistance decreases. Accordingly, the total volume fraction of these microstructures is 5 % or less of the entire steel microstructure at the position. The volume fraction is preferably 4 % or less, and more preferably 3 % or less.

In the present disclosure, a requirement for achieving the foregoing effects is that the above-described steel microstructure at the wall thickness center exists in an area of about 0.10 mm$^2$ in a range of ±1.0 mm from the position of 1/2 of the thickness of the base metal portion of the steel pipe or tube in the wall thickness direction (depth direction). In the present disclosure, the "steel microstructure at the wall thickness center" means the steel microstructure in an area of about 0.10 mm$^2$ in a range of ±1.0 mm in the wall thickness direction centered on the wall thickness center.

Another requirement for achieving the foregoing effects is that the above-described steel microstructure at the 0.1 mm position exists in an area of about 0.10 mm² in a range of ±0.06 mm in the wall thickness direction centered on the 0.1 mm position. In the present disclosure, the "steel microstructure at the 0.1 mm position" means the steel microstructure in an area of about 0.10 mm² in a range of ±0.06 mm in the wall thickness direction centered on the 0.1 mm position.

Absolute value of circumferential residual stress on pipe or tube inner surface: 10 MPa or more

If the absolute value of the circumferential residual stress on the pipe or tube inner surface is less than 10 MPa, the amount of pipe or tube expansion in the internal pressure application process is excessively large, so that the dislocation density on the pipe or tube surface increases and SSC resistance decreases.

The reason why the circumferential residual stress is specified as an absolute value is that the absolute value of the circumferential residual stress decreases as the amount of pipe or tube expansion in the internal pressure application process increases.

Although no upper limit is placed on the absolute value of the circumferential residual stress, the absolute value of the circumferential residual stress is preferably 800 MPa or less because the absolute value of the shear residual stress after the internal pressure application process increases excessively in some cases.

Absolute value of shear residual stress on pipe or tube inner surface: 300 MPa or less

If the absolute value of the shear residual stress on the pipe or tube inner surface is more than 300 MPa, when stress is applied, the multiplication of crystal dislocations in the microstructure in the steel pipe or tube is promoted and the dislocation density increases, resulting in a decrease in SSC resistance. The absolute value of the shear residual stress on the pipe or tube inner surface is preferably 280 MPa or less, and more preferably 260 MPa or less.

The reason why the shear residual stress is specified as an absolute value is that tensile deformation or compressive deformation is applied from various directions in use environments, such as tension or compression in the pipe or tube axial direction due to bending of the pipe or tube and tension in the pipe or tube circumferential direction due to internal pressure.

Although no lower limit is placed on the absolute value of the shear residual stress on the pipe or tube inner surface, the absolute value of the shear residual stress on the pipe or tube inner surface is preferably 10 MPa or more because it is difficult to limit the residual stress in each of the pipe or tube axial direction and the pipe or tube circumferential direction to 0.

The steel microstructure can be observed by the following method.

First, a test piece for microstructure observation is taken so that the observation plane will be a section parallel to both the pipe or tube axial direction and the wall thickness direction, polished, and then etched with nital. For microstructure observation, an optical microscope (magnification: 1000 times) or a scanning electron microscope (SEM, magnification: 1000 times) is used to observe and photograph the microstructure at each of the wall thickness center and the position 0.1 mm radially outward from the pipe or tube inner surface.

Next, the area ratios of ferrite, bainite, and residual microstructures (pearlite, martensite, and austenite) are determined from the obtained optical microscope image or SEM image. The area ratio of each of these microstructures is calculated by averaging the values obtained through observation for five observation fields. In the present disclosure, the area ratio of each microstructure obtained by microstructure observation is taken to be the volume fraction of the microstructure.

Ferrite is a product of diffusion transformation, and exhibits a nearly recovered microstructure with low dislocation density. Ferrite includes polygonal ferrite and pseudo-polygonal ferrite.

Bainite is a multi-phase microstructure of lath-like ferrite and cementite with high dislocation density.

Pearlite is a Eutectoid microstructure of iron and iron carbide (ferrite + cementite), and exhibits a lamellar microstructure in which linear ferrite and cementite are arranged alternately. Pearlite also includes pseudo-pearlite, which is a microstructure in which dot-like cementite is regularly arranged in ferrite.

Martensite is a lath-like low-temperature transformed microstructure with very high dislocation density. Martensite is brighter in contrast than ferrite and bainite in SEM images.

It is difficult to distinguish martensite from austenite in optical microscope images and SEM images. Hence, the area ratio of microstructure observed as martensite or austenite in the obtained SEM image is measured, and the volume fraction of austenite measured by the below-described method is subtracted from the measured area ratio to obtain the volume fraction of martensite.

The volume fraction of austenite is measured by an X-ray diffraction method, taking advantage of the fact that austenite is fcc phase. A test piece for measurement at the wall thickness center is ground so that the diffraction plane will be at the wall thickness center, and then chemically polished to remove the surface treatment layer. A test piece for measurement at the 0.1 mm position is mirror-polished so that the diffraction plane will be at a position 0.1 mm radially outward from the pipe or tube inner surface, and then the polished surface is chemically polished to remove the surface treatment layer. Mo Kα rays are used in the measurement to determine the integrated intensities of the (200), (220), and (311) planes of fcc iron and the (200) and (211) planes of bcc iron. Assuming that the normalized integrated intensity obtained by dividing each of the values by the theoretical intensity value is proportional to the volume fraction of the corresponding phase, the proportion of the normalized integrated intensity of austenite is determined to obtain the volume fraction of austenite.

The average crystal grain size is measured in the following manner. A section parallel to both the pipe or tube axial direction and the wall thickness direction is mirror-polished. A histogram of crystal grain size distribution (a graph in which the horizontal axis represents crystal grain size and the vertical axis represents the existence ratio at each crystal grain size) at the wall thickness center is calculated using the SEM/EBSD method, and the arithmetic average of the crystal grain sizes is calculated. The measurement conditions are an acceleration voltage of 15 kV, a measurement region of 200 $\mu$m $\times$ 200 $\mu$m, and a measurement step size (measurement resolution) of 0.5 $\mu$m. Measurement is performed for five observation fields, and the measured values are averaged. In the crystal grain size analysis, crystal grains of less than 2.0 $\mu$m in grain size are excluded as measurement noise.

The absolute value of the shear residual stress on the pipe or tube inner surface is measured by an X-ray diffraction method on the inner surface of the electric resistance welded steel pipe or tube at the longitudinal center that has been electropolished by 100 $\mu$m.

The X-ray source is Cr K$\alpha$ rays, the pipe or tube voltage is 30 kV, the pipe or tube current is 1.0 mA, the measurement method is the cos$\alpha$ method, and the measurement lattice plane is (211). The residual stress in the pipe or tube axial direction and the pipe or tube circumferential direction is measured on the pipe or tube inner surface at the electric resistance weld portion and each of the positions (12 positions) at intervals of 30° in the pipe or tube circumferential direction with respect to the electric resistance weld portion. Such shear residual stress is residual stress near the surface layer and thus can be considered to be a state of plane stress. The principal stress directions are the pipe or tube axial direction and the pipe or tube circumferential direction, and the absolute value of the shear residual stress is calculated as the absolute value of ((the residual stress (MPa) in the pipe or tube axial direction - the residual stress (MPa) in the pipe or tube circumferential direction)/2).

Here, the residual stress in the pipe or tube axial direction or the pipe or tube circumferential direction is a positive value if it is tensile, a negative value if it is compressive, and 0 if there is no residual stress in the pipe or tube axial direction or the pipe or tube circumferential direction. The absolute value of the shear residual stress is calculated at each position, and the maximum value of them is taken to be the absolute value of the shear residual stress in the present disclosure.

The absolute value of the circumferential residual stress on the pipe or tube inner surface can be set as the absolute value of the residual stress in the pipe or tube circumferential direction obtained in the above-described measurement of the absolute value of the shear residual stress on the pipe or tube inner surface.

Next, a preferred range of the chemical composition of (the base metal portion of) the electric resistance welded steel pipe or tube according to the present disclosure and the hot-rolled steel sheet as its material and the reasons for such limitations will be described from the viewpoint of ensuring the above-described properties, steel microstructure, etc. In this specification, "%" representing the chemical composition of steel is mass% unless otherwise noted.

C: 0.020 % or more and 0.150 % or less

C is an element that increases the strength of the steel through solid solution strengthening. C also contributes to refining the microstructure by lowering the transformation start temperature. In order to ensure the desired strength in the present disclosure, the C content is preferably 0.020 % or more. If the C content is more than 0.150 %, quench hardenability increases and hard pearlite, martensite, and austenite form excessively. The C content is therefore preferably 0.150 % or less. The C content is more preferably 0.025 % or more. The C content is more preferably 0.140 % or less. The C content is further preferably 0.030 % or more. The C content is further preferably 0.130 % or less.

Si: 0.01 % or more and 0.50 % or less

Si is an element that increases the strength of the steel through solid solution strengthening. In order to achieve this effect, the Si content is preferably 0.01 % or more. If the Si content is more than 0.50 %, quench hardenability increases and hard pearlite, martensite, and austenite form excessively. Moreover, oxides tend to form in the electric resistance weld portion, causing degradation in weld portion properties. The Si content is therefore preferably 0.50 % or less. The Si content is more preferably 0.02 % or more. The Si content is more preferably 0.45 % or less. The Si content is further preferably 0.03 % or more. The Si content is further preferably 0.40 % or less.

Mn: 0.30 % or more and 2.00 % or less

Mn is an element that increases the strength of the steel through solid solution strengthening. Mn also contributes to refining the microstructure by lowering the transformation start temperature. In order to ensure the desired strength and steel microstructure in the present disclosure, the Mn content is preferably 0.30 % or more. If the Mn content is more than 2.00 %, quench hardenability increases and hard pearlite, martensite, and austenite form excessively. The Mn content is therefore preferably 2.00 % or less. The Mn content is more preferably 0.40 % or more. The Mn content is more preferably 1.90 % or less. The Mn content is further preferably 0.50 % or more. The Mn content is further preferably 1.80 % or less.

P: 0.050 % or less

P segregates at grain boundaries and causes inhomogeneity in the material. Accordingly, it is desirable to reduce P as much as possible, and the P content is preferably 0.050 % or less. The P content is more preferably 0.040 % or less, and further preferably 0.030 % or less. Although no lower limit is placed on the P content (which is typically more than 0 %), the P content is preferably 0.001 % or more because excessive reduction leads to high refining costs.

S: 0.0200 % or less

S is usually present in steel as MnS. MnS is stretched thinly in the hot rolling process, which adversely affects ductility and toughness. Accordingly, it is desirable to reduce S as much as possible in the present disclosure, and the S content is preferably 0.0200 % or less. The S content is more preferably 0.0100 % or less, and further preferably 0.0050 % or less. Although no lower limit is placed on the S content (which is typically more than 0 %), the S content is preferably 0.0001 % or more because excessive reduction leads to high refining costs.

Al: 0.005 % or more and 0.100 % or less

Al is an element that acts as a strong deoxidizer. In order to achieve this effect, the Al content is preferably 0.005 % or more. If the Al content is more than 0.100 %, weldability deteriorates, and also alumina-based inclusions increase and surface characteristics deteriorate. The Al content is therefore preferably in the range of 0.005 % or more and 0.100 % or less. The Al content is more preferably 0.010 % or more. The Al content is more preferably 0.080 % or less. The Al content is further preferably 0.015 % or more. The Al content is further preferably 0.070 % or less.

N: 0.0100 % or less

N is an element that firmly locks dislocation motion and thus decreases ductility and toughness. It is desirable to reduce N as an impurity as much as possible in the present disclosure, but a N content of up to 0.0100 % is acceptable. The N content is therefore preferably 0.0100 % or less. The N content is more preferably 0.0080 % or less. Although no lower limit is placed on the N content (which is typically more than 0 %), the N content is preferably 0.0010 % or more because excessive reduction leads to high refining costs.

The chemical composition of the base metal may further contain, in mass%, one or more selected from

Nb: (more than 0 % and) 0.100 % or less,
V: (more than 0 % and) 0.100 % or less,
Ti: (more than 0 % and) 0.150 % or less,
Cr: (more than 0 % and) 1.00 % or less,
Mo: (more than 0 % and) 1.00 % or less,
Cu: (more than 0 % and) 1.00 % or less,
Ni: (more than 0 % and) 1.00 % or less,
Ca: (more than 0 % and) 0.0100 % or less, and
B: (more than 0 % and) 0.0100 % or less.

Nb: 0.100 % or less

Nb is an element that forms fine carbides and nitrides in the steel to contribute to improving the strength of the steel and also suppresses coarsening of austenite during hot rolling to contribute to refining the microstructure. In order to achieve these effects, the Nb content is preferably 0.001 % or more. If the Nb content is more than 0.100 %, strength increases excessively and SSC resistance decreases. The Nb content is therefore preferably 0.100 % or less. The Nb content is more preferably 0.002 % or more, and further preferably 0.005 % or more. The Nb content is more preferably 0.090 % or less, and further preferably 0.080 % or less.

Ti: 0.150 % or less

Ti is an element that forms fine carbides and nitrides in the steel to contribute to improving the strength of the steel. In addition, since Ti has high affinity with N, Ti renders N in the steel harmless as nitride and thus contributes to improving the ductility of the steel. In order to achieve these effects, the Ti content is preferably 0.001 % or more. If the Ti content is more than 0.150 %, strength increases excessively and SSC resistance decreases. The Ti content is therefore preferably 0.150 % or less. The Ti content is more preferably 0.002 % or more, and further preferably 0.005 % or more. The Ti content is more preferably 0.140 % or less, and further preferably 0.130 % or less.

V: 0.100 % or less

V is an element that forms fine carbides and nitrides in the steel to contribute to improving the strength of the steel. In order to achieve this effect, the V content is preferably 0.001 % or more. If the V content is more than 0.100 %, strength increases excessively and SSC resistance decreases. The V content is therefore preferably 0.100 % or less. The V content is more preferably 0.002 % or more, and further preferably 0.005 % or more. The V content is more preferably 0.090 % or less, and further preferably 0.080 % or less.

Cr: 1.00 % or less

Cr is an element that enhances the quench hardenability of the steel and increases the strength of the steel. In order to achieve this effect, the Cr content is preferably 0.01 % or more. If the Cr content is more than 1.00 %, hard pearlite, martensite, and austenite form excessively and SSC resistance decreases. The Cr content is therefore preferably 1.00 % or less. The Cr content is more preferably 0.02 % or more, and further preferably 0.05 % or more. The Cr content is more preferably 0.80 % or less, and further preferably 0.60 % or less.

Mo: 1.00 % or less

Mo is an element that enhances the quench hardenability of the steel and increases the strength of the steel. In order to achieve this effect, the Mo content is preferably 0.01 % or more. If the Mo content is more than 1.00 %, hard pearlite, martensite, and austenite form excessively and SSC resistance decreases. The Mo content is therefore preferably 1.00 % or less. The Mo content is more preferably 0.02 % or more, and further preferably 0.05 % or more. The Mo content is more preferably 0.80 % or less, and further preferably 0.60 % or less.

Cu: 1.00 % or less

Cu is an element that increases the strength of the steel through solid solution strengthening. In order to achieve this effect, the Cu content is preferably 0.01 % or more. If the Cu content is more than 1.00 %, hard pearlite, martensite, and austenite form excessively and SSC resistance decreases. The Cu content is therefore preferably 1.00 % or less. The Cu content is more preferably 0.02 % or more, and further preferably 0.05 % or more. The Cu content is more preferably 0.80 % or less, and further preferably 0.60 % or less.

Ni: 1.00 % or less

Ni is an element that increases the strength of the steel through solid solution strengthening. In order to achieve this effect, the Ni content is preferably 0.01 % or more. If the Ni content is more than 1.00 %, hard pearlite, martensite, and austenite form excessively and SSC resistance decreases. The Ni content is therefore preferably 1.00 % or less. The Ni content is more preferably 0.02 % or more, and further preferably 0.05 % or more. The Ni content is more preferably 0.80 % or less, and further preferably 0.60 % or less.

Ca: 0.0100 % or less

Ca is an element that spheroidizes sulfides such as MnS that are stretched thinly in the hot rolling process and thus contributes to improving the ductility of the steel. In order to achieve this effect, the Ca content is preferably 0.0002 % or more. If the Ca content is more than 0.0100 %, Ca oxide clusters are formed in the steel and ductility decreases. The Ca content is therefore preferably 0.0100 % or less. The Ca content is more preferably 0.0005 % or more, and further preferably 0.0010 % or more. The Ca content is more preferably 0.0080 % or less, and further preferably 0.0060 % or less.

B: 0.0100 % or less

B is an element that enhances the quench hardenability of the steel and increases the strength of the steel. In order to achieve this effect, the B content is preferably 0.0001 % or more. If the B content is more than 0.0100 %, hard pearlite, martensite, and austenite form excessively and SSC resistance decreases. The B content is therefore preferably 0.0100 % or less. The B content is more preferably 0.0005 % or more, and further preferably 0.0008 % or more. The B content is more preferably 0.0080 % or less, further preferably 0.0060 % or less, and even more preferably 0.0040 % or less.

In the chemical composition, the balance consists of Fe and inevitable impurities. Examples of the inevitable impurities in the balance include Sn, As, Sb, Bi, Co, Pb, Zn, and O. Here, the Sn content may be 0.1 % or less, the content of each of As, Sb, and Co may be 0.05 % or less, and the content of each of Bi, Pb, Zn, and O may be 0.005 % or less unless the effects according to the present disclosure are impaired.

Next, an embodiment of a production method for the electric resistance welded steel pipe or tube according to the present disclosure will be described.

A hot-rolled steel sheet as the material of the electric resistance welded steel pipe or tube according to the present disclosure is produced, for example, by heating a steel material having the above-described chemical composition to a heating temperature of 1100 °C or more and 1300 °C or less and then subjecting the steel material to hot rolling with a rolling finish temperature of 750 °C or more and 850 °C or less (hot rolling process), and thereafter performing cooling with an average cooling rate at the sheet thickness center of 10 °C/s or more and 60 °C/s or less, a cooling stop temperature at the sheet thickness center of 450 °C or more and 650 °C or less, and a cooling stop temperature at the sheet surface of 250 °C or more and 500 °C or less (cooling process). The hot-rolled steel sheet may then be coiled.

The electric resistance welded steel pipe or tube according to the present disclosure is produced by forming the hot-rolled steel sheet into a cylinder by cold roll forming and butting and electric resistance welding both circumferential ends of the cylinder together (pipe or tube formation process), thereafter obtaining an electric resistance welded steel pipe or tube material using a sizing roll that satisfies the following formula (1) (sizing process), and thereafter applying an internal pressure p (MPa) that satisfies the following formula (2) to the inner surface of the electric resistance welded steel pipe or tube material (internal pressure application process).

$$(\text{Diameter (mm) of sizing roll}) \geq (\text{sheet thickness (mm) of hot-rolled steel sheet})/0.020 \quad ... \quad (1)$$

$$X < p \leq X \times 1.5 \quad\quad\quad ... (2)$$

where X = ((wall thickness (mm) of electric resistance welded steel pipe or tube material)/(radius (mm) of electric resistance welded steel pipe or tube material)) × (yield stress (MPa) of electric resistance welded steel pipe or tube material).

Herein, the term "cylinder" means that the pipe or tube circumferential section is C-shaped.

The internal pressure can be applied, for example, by sealing the pipe or tube end with rubber packing and applying water pressure to the inside of the pipe or tube. In order to stabilize the shape, a die of a desired diameter may be optionally used as an outer frame.

In the following description of the production method, the temperature expressed in "°C" is the surface temperature of each of the steel material, steel sheet, and hot-rolled steel sheet (hereafter referred to as "steel sheet, etc."), unless otherwise noted. The surface temperature of the steel sheet, etc. can be measured using a radiation thermometer, for example. The temperature at the sheet thickness center of the steel sheet, etc. can be measured, for example, by calculating the temperature distribution in a section of the steel sheet, etc. by thermal analysis and correcting the result using the surface temperature of the steel sheet, etc.

The production method for the hot-rolled steel sheet as the material of the electric resistance welded steel pipe or tube according to the present disclosure will be described in more detail below.

In the present disclosure, the method of preparing the steel material (steel slab) by steelmaking is not limited. For example, any of the known steelmaking methods such as converter, electric furnace, and vacuum melting furnace is applicable. The casting method is not limited, and the steel material is produced in the desired dimensions by a known casting method such as continuous casting, for example. Ingot casting and blooming may be used instead of continuous casting. The molten steel may be further subjected to secondary refining such as ladle refining.

Heating temperature: 1100 °C or more and 1300 °C or less

If the heating temperature of the steel material is less than 1100 °C, the deformation resistance of the rolled material increases, making rolling difficult. If the heating temperature is more than 1300 °C, the austenite grains coarsen and fine austenite grains cannot be obtained in the subsequent rolling (rough rolling, finish rolling), making it difficult to ensure the desired average crystal grain size in the present disclosure. The heating temperature in the hot rolling process is therefore 1100 °C or more and 1300 °C or less. The heating temperature is more preferably 1120 °C or more. The heating temperature is more preferably 1280 °C or less.

In the present disclosure, it is possible to use not only a conventional method of, after producing a steel slab (slab), cooling the slab to room temperature and then reheating the slab, but also an energy-saving process of hot direct rolling in which the warm slab is charged into the heating furnace without being cooled to room temperature or the slab is subjected to a short period of heat retention and then immediately rolled.

Rolling finish temperature: 750 °C or more and 850 °C or less

If the rolling finish temperature in the hot rolling process is less than 750 °C, the surface temperature of the steel sheet falls to or below the ferrite transformation start temperature during finish rolling and deformed ferrite with high dislocation density forms, causing a decrease in SSC resistance. If the rolling finish temperature is more than 850 °C, the rolling reduction amount in the austenite non-recrystallization temperature range is insufficient, and fine austenite grains cannot be obtained. This makes it difficult to ensure the desired average crystal grain size in the present disclosure. The rolling finish temperature is therefore 750 °C or more and 850 °C or less. The rolling finish temperature is more preferably 770 °C or more. The rolling finish temperature is more preferably 830 °C or less.

In the present disclosure, the finish sheet thickness (the sheet thickness of the steel sheet after finish rolling) is preferably 4 mm or more. Although no upper limit is placed on the finish sheet thickness, the finish sheet thickness is preferably 30 mm or less from the viewpoint of temperature control of the steel sheet.

Average cooling rate at sheet thickness center: 10 °C/s or more and 60 °C/s or less

If the average cooling rate at the sheet thickness center in the cooling process is less than 10 °C/s, the frequency of nucleation of ferrite and bainite decreases and ferrite and bainite coarsen, so that a steel microstructure having the desired average crystal grain size in the present disclosure cannot be obtained and strength decreases. If the average cooling rate is more than 60 °C/s, a large amount of hard microstructure forms on the steel sheet surface, so that a steel microstructure having the desired microstructure proportion in the present disclosure cannot be obtained and SSC resistance decreases. The average cooling rate at the sheet thickness center is preferably 15 °C/s or more. The average cooling rate at the sheet thickness center is preferably 55 °C/s or less.

In the present disclosure, it is preferable to start the cooling process immediately after the end of the finish rolling because, if ferrite forms before the cooling process, ferrite coarsens and a steel microstructure having the desired average crystal grain size in the present disclosure cannot be obtained, which causes a decrease in strength.

Cooling stop temperature at sheet thickness center: 450 °C or more and 650 °C or less

If the cooling stop temperature at the sheet thickness center in the cooling process is less than 450 °C, the cooling stop temperature at the steel sheet surface is excessively low and a large amount of hard microstructure forms on the steel sheet surface, so that a steel microstructure having the desired microstructure proportion in the present disclosure cannot be obtained and SSC resistance decreases. If the cooling stop temperature at the sheet thickness center is more than 650 °C, the frequency of nucleation of ferrite and bainite decreases and ferrite and bainite coarsen, so that a microstructure having the desired average crystal grain size in the present disclosure cannot be obtained and strength decreases. The cooling stop temperature at the sheet thickness center is preferably 480 °C or more. The cooling stop temperature at the sheet thickness center is preferably 620 °C or less.

Cooling stop temperature at sheet surface: 250 °C or more and 500 °C or less

If the cooling stop temperature at the sheet surface in the cooling process is less than 250 °C, a large amount of hard microstructure forms on the steel sheet surface, so that a steel microstructure having the desired microstructure proportion in the present disclosure cannot be obtained and SSC resistance decreases. If the cooling stop temperature at the sheet surface is more than 500 °C, the cooling stop temperature at the sheet thickness center is excessively high, so that the frequency of nucleation of ferrite and bainite decreases at the sheet thickness center and ferrite and bainite coarsen. Consequently, a microstructure having the desired average crystal grain size in the present disclosure cannot be obtained and strength decreases. The cooling stop temperature at the sheet surface is preferably 280 °C or more. The cooling stop temperature at the sheet surface is preferably 470 °C or less.

In the present disclosure, the average cooling rate is a value (cooling rate) calculated as ((the sheet thickness center temperature of the steel sheet before cooling - the sheet thickness center temperature of the hot-rolled steel sheet after cooling)/the cooling time), unless otherwise noted.

The cooling method may be, for example, water cooling by spraying water from a nozzle, or cooling by spraying cooling gas. In the present disclosure, it is preferable to perform cooling operation (treatment) on both sides of the steel sheet so that both sides of the steel sheet will be cooled under the same conditions.

After the cooling process, the hot-rolled steel sheet is formed into a cylinder by cold roll forming, and both circumferential ends of the cylinder are butted and electric resistance welded together (pipe or tube formation process). Next, an electric resistance welded steel pipe or tube material is obtained using a sizing roll (sizing process). In the sizing process, bending deformation occurs in the pipe or tube axial direction along the roll shape when the pipe or tube passes through the roll, and residual stress in the pipe or tube axial direction is generated. The absolute value of the residual stress in the pipe or tube axial direction is larger when the bending strain in the bending deformation is larger. The bending strain is larger when the diameter of the sizing roll is smaller and when the sheet thickness of the hot-rolled steel sheet is larger.

Accordingly, in the present disclosure, from the viewpoint of lowering the shear residual stress, the diameter of the sizing roll satisfies the foregoing formula (1) in order to reduce the absolute value of the residual stress in the pipe or tube axial direction.

If the diameter of the sizing roll is less than the right-hand side of formula (1), the desired shear residual stress in the present disclosure cannot be obtained. Although no upper limit is placed on the diameter of the sizing roll, the diameter of the sizing roll is preferably 2000 mm or less because a larger sizing roll increases the equipment load.

In the internal pressure application process after the sizing process, the electric resistance welded steel pipe or tube material is expanded to generate tensile stress in the pipe or tube circumferential direction, thereby reducing the absolute value of the residual stress in the pipe or tube circumferential direction.

The absolute value of the residual stress in the pipe or tube circumferential direction is smaller when the internal pressure p (MPa) in the internal pressure application process is higher. The tensile stress generated in the pipe or tube circumferential direction is larger when the radius of the steel pipe or tube is larger and when the wall thickness of the steel pipe or tube is smaller.

The left-hand side (X) of the foregoing formula (2) corresponds to the internal pressure p when the tensile stress generated in the pipe or tube circumferential direction is equal to the yield stress of the electric resistance welded steel pipe or tube material.

In the present disclosure, from the viewpoint of lowering the shear residual stress, the internal pressure p is set to a value greater than the left-hand side (X) of formula (2) and the electric resistance welded steel pipe or tube material is expanded to the plastic region, in order to reduce the absolute value of the residual stress in the pipe or tube axial direction. If the internal pressure p is more than the right-hand side (X × 1.5) of formula (2), the absolute value of the residual stress in the pipe or tube circumferential direction decreases, but the amount of work hardening due to pipe or tube expansion is excessively large and the dislocation density on the pipe or tube surface increases, causing a decrease in SSC resistance.

The high-strength electric resistance welded steel pipe or tube according to the present disclosure is produced by the production method described above. The high-strength electric resistance welded steel pipe or tube according to the present disclosure exhibits excellent SSC resistance and also has high yield stress.

EXAMPLES

The presently disclosed techniques will be described in more detail below by way of examples. The present disclosure is not limited to the following examples.

Molten steels having the chemical compositions shown in Table 1 were each prepared by steelmaking, and formed into a slab (steel material). The obtained slab was subjected to hot rolling and cooling under the conditions shown in Table 2 to obtain a hot-rolled steel sheet with the finish sheet thickness (mm) shown in Table 2.

The hot-rolled steel sheet was formed into a cylindrical open pipe or tube (round steel pipe or tube) by cold roll forming, and the butting parts of the open pipe or tube were electric resistance welded (pipe or tube formation process). The product of the electric resistance welding was then reduced in diameter using rolls arranged above, below, left, and right (sizing process) to obtain an electric resistance welded steel pipe or tube material with the radius (mm) and wall thickness (mm) shown in Table 2 and a length of 12 m.

Both pipe or tube ends of the electric resistance welded steel pipe or tube material were sealed with rubber packing, and a water pressure p (MPa) was applied to the pipe or tube inner surface (internal pressure application process) to obtain an electric resistance welded steel pipe or tube.

[Table 1]

Table 1

| No. | Chemical composition (mass%) | | | | | | | | | | | | | | | |
|-----|-------|------|------|-------|--------|-------|--------|-------|-------|-------|------|------|------|------|--------|--------|
| | C | Si | Mn | P | S | Al | N | Nb | V | Ti | Cr | Mo | Cu | Ni | Ca | B |
| 1 | 0.127 | 0.15 | 0.92 | 0.006 | 0.0003 | 0.033 | 0.0035 | - | - | - | - | - | - | - | - | - |
| 2 | 0.031 | 0.36 | 1.77 | 0.016 | 0.0012 | 0.042 | 0.0036 | 0.056 | 0.027 | 0.033 | 0.07 | 0.15 | - | - | 0.0018 | - |
| 3 | 0.053 | 0.04 | 0.34 | 0.022 | 0.0043 | 0.019 | 0.0029 | - | 0.058 | - | 0.13 | 0.08 | 0.24 | 0.29 | - | 0.0023 |
| 4 | 0.061 | 0.09 | 0.85 | 0.008 | 0.0009 | 0.024 | 0.0040 | 0.029 | - | 0.121 | - | - | - | - | - | - |
| 5 | 0.092 | 0.26 | 1.61 | 0.004 | 0.0006 | 0.055 | 0.0049 | - | 0.043 | 0.022 | - | - | 0.36 | 0.15 | 0.0031 | - |
| 6 | 0.044 | 0.17 | 1.23 | 0.007 | 0.0005 | 0.034 | 0.0023 | 0.012 | - | 0.015 | 0.23 | 0.11 | - | - | - | - |
| 7 | 0.069 | 0.33 | 1.64 | 0.034 | 0.0028 | 0.037 | 0.0018 | 0.025 | - | - | - | - | 0.14 | 0.12 | - | - |
| 8 | 0.034 | 0.12 | 1.01 | 0.025 | 0.0034 | 0.022 | 0.0028 | - | 0.049 | 0.043 | - | 0.20 | - | - | - | - |
| 9 | 0.139 | 0.38 | 1.53 | 0.018 | 0.0011 | 0.021 | 0.0025 | - | - | 0.060 | - | - | - | - | 0.0014 | - |
| 10 | 0.139 | 0.38 | 1.53 | 0.018 | 0.0011 | 0.021 | 0.0025 | - | - | 0.060 | - | - | - | - | 0.0014 | - |
| 11 | 0.028 | 0.25 | 1.54 | 0.019 | 0.0024 | 0.026 | 0.0031 | - | 0.067 | - | 0.17 | - | - | - | - | 0.0035 |
| 12 | 0.051 | 0.22 | 1.67 | 0.033 | 0.0015 | 0.017 | 0.0043 | 0.011 | 0.042 | 0.024 | - | - | - | - | - | - |
| 13 | 0.114 | 0.17 | 1.46 | 0.026 | 0.0008 | 0.032 | 0.0016 | - | - | - | 0.20 | 0.19 | 0.11 | 0.19 | - | - |
| Balance of chemical composition other than above consists of Fe and inevitable impurities. | | | | | | | | | | | | | | | | |

EP 4 560 031 A1

[Table 2]

[Table 2]

Table 2

| No. | Hot rolling process | | Cooling process | | | Finish sheet thickness of hot-rolled steel sheet (mm) | Sizing process | | Electric resistance welded steel pipe or tube material | | | Internal pressure application process | | |
|---|---|---|---|---|---|---|---|---|---|---|---|---|---|---|
| | Heating temperature (°C) | Rolling finish temperature (°C) | Average cooling rate at sheet thickness center (°C/s) | Cooling stop temperature at sheet thickness center (°C) | Cooling stop temperature at sheet surface (°C) | | Right-hand side of formula (1) | Diameter of sizing roll (mm) | Radius (mm) | Wall thickness (mm) | Yield stress (MPa) | X | X×1.5 | Internal pressure p (MPa) |
| 1 | 1200 | 820 | 19 | 510 | 420 | 25 | 1250 | 1300 | 305 | 25 | 453 | 37.1 | 55.7 | 41.1 |
| 2 | 1200 | 830 | 22 | 590 | 380 | 22 | 1100 | 1300 | 305 | 22 | 540 | 39.0 | 58.5 | 54.3 |
| 3 | 1250 | 800 | 38 | 480 | 390 | 12 | 600 | 800 | 254 | 12 | 487 | 23.0 | 34.5 | 29.6 |
| 4 | 1150 | 810 | 15 | 630 | 460 | 7 | 350 | 400 | 64 | 7 | 516 | 56.4 | 84.6 | 60.2 |
| 5 | 1200 | 780 | 43 | 500 | 370 | 28 | 1400 | 1450 | 330 | 28 | 494 | 41.9 | 62.9 | 51.9 |
| 6 | 1250 | 790 | 25 | 520 | 430 | 16 | 800 | 1000 | 279 | 16 | 492 | 28.2 | 42.3 | 40.7 |
| 7 | 1150 | 820 | 12 | 420 | 240 | 19 | 950 | 1000 | 254 | 19 | 418 | 31.3 | 47.0 | 32.8 |
| 8 | 1200 | 770 | 18 | 660 | 530 | 19 | 950 | 1000 | 254 | 19 | 395 | 29.5 | 44.3 | 31.0 |
| 9 | 1200 | 840 | 65 | 580 | 270 | 14 | 700 | 800 | 203 | 14 | 441 | 30.4 | 45.6 | 44.2 |
| 10 | 1200 | 830 | 7 | 630 | <u>610</u> | 19 | 950 | 1000 | 203 | 19 | 376 | 35.2 | 52.8 | 40.1 |
| 11 | 1250 | 840 | 44 | 550 | 300 | 22 | 1100 | 1000 | 305 | 22 | 430 | 31.0 | 46.5 | 39.8 |
| 12 | 1250 | 800 | 51 | 530 | 350 | 22 | 1100 | 1300 | 330 | 22 | 425 | 28.3 | 42.5 | 27.4 |
| 13 | 1150 | 790 | 26 | 490 | 340 | 20 | 1000 | 1300 | 229 | 20 | 456 | 39.8 | 59.7 | 62.8 |

X = ((wall thickness (mm) of electric resistance welded steel pipe or tube material)/(radius (mm) of electric resistance welded steel pipe or tube material))×(yield stress (MPa) of electric resistance welded steel pipe or tube material)

Underlined values are outside the range according to the present disclosure.

Various test pieces were collected from each of the electric resistance welded steel pipes or tubes thus obtained, and average crystal grain size measurement, microstructure observation, tensile test, residual stress measurement, and four-point bending corrosion test were conducted by the following methods. Here, each type of test piece except for residual stress measurement was taken from the base metal portion 90° away from the electric resistance weld portion in the pipe or tube circumferential direction, with the electric resistance weld portion being set at 0°.

[Average crystal grain size measurement]

A test piece for measurement was taken from the electric resistance welded steel pipe or tube so that the measurement plane would be a section parallel to both the pipe or tube axial direction and the wall thickness direction, and mirror-polished. The average crystal grain size was measured using the SEM/EBSD method. The crystal grain size was measured by determining the orientation differences between adjacent crystal grains and defining the boundaries with an orientation difference of 15° or more as crystal grain boundaries. The arithmetic average of the crystal grain sizes (equivalent circular diameters) was calculated from the obtained grain boundaries and taken to be the average crystal grain size. The measurement conditions were an acceleration voltage of 15 kV, a measurement region of 200 $\mu$m $\times$ 200 $\mu$m, and a measurement step size (measurement resolution) of 0.5 $\mu$m. The measured values for five observation fields were averaged. In the crystal grain size analysis, crystal grains of less than 2.0 $\mu$m in grain size were excluded as measurement noise.

The measurement positions were at the wall thickness center. A histogram of crystal grain size distribution (a graph in which the horizontal axis represents crystal grain size and the vertical axis represents the existence ratio at each crystal grain size) was calculated at each position, and the arithmetic average of the crystal grain sizes was calculated as the average crystal grain size.

[Microstructure observation]

A test piece for microstructure observation was taken from the electric resistance welded steel pipe or tube so that the observation plane would be a section parallel to both the pipe or tube axial direction and the wall thickness direction, mirror-polished, and then etched with nital. For microstructure observation, an optical microscope (magnification: 1000 times) or a scanning electron microscope (SEM, magnification: 1000 times) was used to observe and photograph the microstructure at each of the wall thickness center and the position 0.1 mm radially outward from the pipe or tube inner surface. The area ratios of ferrite, bainite, and residual microstructures (pearlite, martensite, and austenite) were then determined from the obtained optical microscope image or SEM image. The area ratio of each of these microstructures was calculated by averaging the values obtained through observation for five observation fields. Here, the area ratio of each microstructure obtained by microstructure observation was taken to be the volume fraction of the microstructure.

Ferrite is a product of diffusion transformation, and exhibits a nearly recovered microstructure with low dislocation density. Ferrite includes polygonal ferrite and pseudo-polygonal ferrite.

Bainite is a multi-phase microstructure of lath-like ferrite and cementite with high dislocation density.

Pearlite is a Eutectoid microstructure of iron and iron carbide (ferrite + cementite), and exhibits a lamellar microstructure in which linear ferrite and cementite are arranged alternately. Pearlite also includes pseudo-pearlite, which is a microstructure in which dot-like cementite is regularly arranged in ferrite.

Martensite is a lath-like low-temperature transformed microstructure with very high dislocation density. Martensite is brighter in contrast than ferrite and bainite in SEM images.

It is difficult to distinguish martensite from austenite in optical microscope images and SEM images. Hence, the area ratio of microstructure observed as martensite or austenite in the obtained SEM image was measured, and the volume fraction of austenite measured by the below-described method was subtracted from the measured area ratio to obtain the volume fraction of martensite.

The volume fraction of austenite was measured by an X-ray diffraction method. A test piece for measurement at the wall thickness center was ground so that the diffraction plane would be at the wall thickness center, and then chemically polished to remove the surface treatment layer. A test piece for measurement at the 0.1 mm position was mirror-polished so that the diffraction plane would be at a position 0.1 mm radially outward from the pipe or tube inner surface, and then the polished surface was chemically polished to remove the surface treatment layer. Mo K$\alpha$ rays were used in the measurement to determine the integrated intensities of the (200), (220), and (311) planes of fcc iron and the (200) and (211) planes of bcc iron. Assuming that the normalized integrated intensity obtained by dividing each of the values by the theoretical intensity value was proportional to the volume fraction of the corresponding phase, the proportion of the normalized integrated intensity of austenite was determined to obtain the volume fraction of austenite.

[Tensile test]

As a test piece, a JIS No. 5 tensile test piece was taken from each of the electric resistance welded steel pipe or tube material and the base metal portion of the electric resistance welded steel pipe or tube so that the tensile direction would be parallel to the pipe or tube axial direction. The tensile test was conducted in accordance with JIS Z 2241. Here, the yield stress (MPa) was taken as the flow stress at a nominal strain of 0.5 %.

[Residual stress measurement]

The absolute value of the shear residual stress on the pipe or tube inner surface was measured by an X-ray diffraction method on the inner surface of the electric resistance welded steel pipe or tube at the longitudinal center that had been electropolished by 100 μm. The X-ray source was Cr Kα rays, the pipe or tube voltage was 30 kV, the pipe or tube current was 1.0 mA, the measurement method was the cosα method, and the measurement lattice plane was (211). The residual stress in the pipe or tube axial direction and the pipe or tube circumferential direction was measured on the pipe or tube inner surface at the electric resistance weld portion and each of the positions (12 positions) at intervals of 30° in the pipe or tube circumferential direction with respect to the electric resistance weld portion, and the absolute value of the shear residual stress was calculated as the absolute value of ((the residual stress (MPa) in the pipe or tube axial direction - the residual stress (MPa) in the pipe or tube circumferential direction)/2).

Here, the residual stress in the pipe or tube axial direction or the pipe or tube circumferential direction was a positive value if it was tensile, a negative value if it was compressive, and 0 if there was no residual stress in the pipe or tube axial direction or the pipe or tube circumferential direction. The absolute value of the shear residual stress was calculated at each position, and the maximum value of them was taken to be the absolute value of the shear residual stress in the present disclosure.

The residual stress in the pipe or tube axial direction and the residual stress in the pipe or tube circumferential direction in Table 3 are the values when the absolute value of the shear residual stress is maximum.

Moreover, the absolute value of the residual stress in the pipe or tube circumferential direction was calculated at each position, and whether the minimum value of them was 10 MPa or more was determined.

[Four-point bending corrosion test]

A four-point bending corrosion test piece with a thickness of 5 mm, a width of 15 mm, and a length of 115 mm was taken from the electric resistance welded steel pipe or tube so that the width direction of the corrosion test piece would be parallel to the pipe or tube circumferential direction of the electric resistance welded steel pipe or tube and the length direction of the corrosion test piece would be parallel to the pipe or tube axial direction of the electric resistance welded steel pipe or tube.

The test piece was taken with the surface layer state of the outer surface of the bend, i.e. the corrosion surface, left intact. In accordance with the EFC16 standard, a tensile stress of 90 % of the yield stress of the electric resistance welded steel pipe or tube obtained in the foregoing tensile test was applied to the corrosion surface of the taken test piece, and the four-point bending corrosion test was carried out using NACE standard TM0177 Solution A at a hydrogen sulfide partial pressure of 1 bar. After immersing the test piece in the solution for 720 hours, whether cracks occurred was determined. Furthermore, test pieces for observation were taken at 1/3 and 2/3 positions in the width direction of the test piece after the test so that the observation plane would be a section parallel to the thickness direction and the length direction.

The obtained test pieces for observation were mirror-polished and observed using an optical microscope to measure the depth and width of all pitting corrosion that occurred in the part where the tensile stress had been applied, and the maximum pitting depth and the maximum pitting depth/width ratio were determined.

The results are shown in Table 3.

[Table 3]

Table 3

| No. | Steel microstructure at wall thickness center | | | | | Steel microstructure at position 0.1 mm radially outward from pipe or tube inner surface | | | | Electric resistance welded steel pipe or tube | Residual stress on pipe or tube inner surface | | | | SSC resistance | | | Remarks |
|---|---|---|---|---|---|---|---|---|---|---|---|---|---|---|---|---|---|---|
| | F fraction (%) | B fraction (%) | (F+B) fraction (%) | Residual microstructure type | Average crystal grain size ($\mu$m) | F fraction (%) | B fraction (%) | (F+B) fraction (%) | Residual microstructure type | Yield stress (MPa) | Residual stress in pipe or tube axial direction (MPa) | Residual stress in pipe or tube circumferential direction (MPa) | Shear residual stress (MPa) | Absolute minimum value of residual stress in pipe or tube circumferential direction (MPa) | Cracks | Maximum pitting depth ($\mu$m) | Maximum pitting depth/ width | |
| 1 | 32 | 67 | 99 | PMA | 6.5 | 12 | 84 | 96 | M | 468 | -318 | -203 | 58 | 192 | Not occurred | 112 | 2.4 | Example |
| 2 | 21 | 71 | 92 | M,A | 7.1 | 9 | 90 | 99 | M,A | 533 | 54 | -278 | 166 | 230 | Not occurred | 135 | 1.9 | Example |
| 3 | 74 | 21 | 95 | M,A | 4.2 | 53 | 43 | 96 | M | 496 | -385 | -197 | 94 | 195 | Not occurred | 74 | 2.2 | Example |
| 4 | 40 | 56 | 96 | M | 5.6 | 22 | 76 | 98 | P,M | 519 | -452 | 101 | 277 | 89 | Not occurred | 157 | 1.6 | Example |
| 5 | 18 | 76 | 94 | A | 8.2 | 14 | 84 | 98 | A | 471 | -297 | 44 | 171 | 40 | Not occurred | 90 | 2.8 | Example |
| 6 | 26 | 72 | 98 | P | 5.4 | 13 | 84 | 97 | P | 485 | -199 | 31 | 115 | 31 | Not occurred | 98 | 2.5 | Example |
| 7 | 35 | 52 | 87 | M,A | 6.3 | 21 | 70 | 91 | M | 434 | -101 | -313 | 106 | 256 | Occurred | 275 | 3.1 | Comparative Example |
| 8 | 48 | 51 | 99 | M,A | 9.3 | 7 | 89 | 96 | M | 392 | 31 | -296 | 164 | 277 | Not occurred | 143 | 1.2 | Comparative Example |

17

| No. | Steel microstructure at wall thickness center | | | | | Steel microstructure at position 0.1 mm radially outward from pipe or tube inner surface | | | | Electric resistance welded steel pipe or tube | Residual stress on pipe or tube inner surface | | | | SSC resistance | | | Remarks |
|---|---|---|---|---|---|---|---|---|---|---|---|---|---|---|---|---|---|---|
| | F fraction (%) | B fraction (%) | (F+B) fraction (%) | Residual microstructure type | Average crystal grain size ($\mu$m) | F fraction (%) | B fraction (%) | (F+B) fraction (%) | Residual microstructure type | Yield stress (MPa) | Residual stress in pipe or tube axial direction (MPa) | Residual stress in pipe or tube circumferential direction (MPa) | Shear residual stress (MPa) | Absolute minimum value of residual stress in pipe or tube circumferential direction (MPa) | Cracks | Maximum pitting depth ($\mu$m) | Maximum pitting depth/ width | |
| 9 | 33 | 63 | 96 | M | 7.4 | 16 | 77 | 93 | M,A | 440 | -341 | 47 | 194 | 31 | Occurred | 254 | 1.9 | Comparative Example |
| 10 | 77 | 14 | 91 | P | 9.5 | 43 | 54 | 97 | P,M | 387 | -413 | -205 | 104 | 185 | Not occurred | 140 | 2.0 | Comparative Example |
| 11 | 34 | 57 | 91 | PMA | 5.2 | 18 | 78 | 96 | P,M | 452 | -521 | 104 | <u>313</u> | 102 | Occurred | 301 | 3.6 | Comparative Example |
| 12 | 58 | 34 | 92 | M | 4.8 | 25 | 71 | 96 | M | 410 | 17 | -598 | 308 | 319 | Occurred | 240 | 3.4 | Comparative Example |
| 13 | 81 | 13 | 94 | M | 6.6 | 44 | 55 | 99 | M | 437 | -206 | -8 | 99 | 7 | Occurred | 296 | 1.8 | Comparative Example |

In steel microstructure, F: ferrite, B: bainite, P: pearlite, M: martensite, A: austenite

Underlined values are outside the range according to the present disclosure.

In Table 3, Nos. 1 to 6 are Examples according to the present disclosure, and Nos. 7 to 13 are Comparative Examples.

In the electric resistance welded steel pipes or tubes of all Examples, the steel microstructure at the wall thickness center of the base metal portion had a total volume fraction of ferrite and bainite of 90 % or more and an average crystal grain size of 9.0 $\mu$m or less, the steel microstructure at a position 0.1 mm radially outward from the pipe or tube inner surface had a total volume fraction of ferrite and bainite of 95 % or more, the absolute value of the circumferential residual stress on the pipe or tube inner surface was 10 MPa or more, and the absolute value of the shear residual stress on the pipe or tube inner surface was 300 MPa or less.

Moreover, in the electric resistance welded steel pipes or tubes of all Examples, the yield stress in the base metal portion was 400 MPa or more in the tensile test, no cracks occurred in the four-point bending corrosion test, and the depth of the pitting corrosion that occurred was less than 250 $\mu$m and the maximum pitting depth/width ratio was less than 3.0.

In the electric resistance welded steel pipe or tube of No. 7 of Comparative Example, due to low cooling stop temperature at the sheet thickness center in the cooling process, the cooling stop temperature at the sheet surface was low, so that a large amount of hard microstructure formed at the wall thickness center and the 0.1 mm position and the total volume fraction of ferrite and bainite was below the range according to the present disclosure. Consequently, the desired SSC resistance was not obtained.

In the electric resistance welded steel pipe or tube of No. 8 of Comparative Example, due to high cooling stop temperature at the sheet thickness center in the cooling process, the cooling stop temperature at the sheet surface was high, so that the average crystal grain size at the wall thickness center exceeded the range according to the present disclosure. Consequently, the desired yield stress was not obtained.

In the electric resistance welded steel pipe or tube of No. 9 of Comparative Example, due to excessively high average cooling rate at the sheet thickness center in the cooling process, a large amount of hard microstructure formed at the 0.1 mm position and the total volume fraction of ferrite and bainite was below the range according to the present disclosure. Consequently, the desired SSC resistance was not obtained.

In the electric resistance welded steel pipe or tube of No. 10 of Comparative Example, due to excessively low average cooling rate at the sheet thickness center in the cooling process, the cooling stop temperature at the sheet surface was outside the upper limit and the average crystal grain size at the wall thickness center exceeded the range according to the present disclosure. Consequently, the desired yield stress was not obtained.

In the electric resistance welded steel pipe or tube of No. 11 of Comparative Example, due to the diameter of the sizing roll used in the sizing process being below the range of formula (1), the absolute value of the shear residual stress on the pipe or tube inner surface exceeded the range according to the present disclosure. Consequently, the desired SSC resistance was not obtained.

In the electric resistance welded steel pipe or tube of No. 12 of Comparative Example, due to the internal pressure p in the internal pressure application process being below the range of formula (2), the absolute value of the shear residual stress on the pipe or tube inner surface exceeded the range according to the present disclosure. Consequently, the desired SSC resistance was not obtained.

In the electric resistance welded steel pipe or tube of No. 13 of Comparative Example, due to the internal pressure p in the internal pressure application process exceeding the range of formula (2), the absolute value of the circumferential residual stress on the pipe or tube inner surface was below the range according to the present disclosure. Consequently, the desired SSC resistance was not obtained.

**Claims**

1. An electric resistance welded steel pipe or tube comprising a base metal portion and an electric resistance weld portion,

   wherein an absolute value of circumferential residual stress on a pipe or tube inner surface of the electric resistance welded steel pipe or tube is 10 MPa or more,
   an absolute value of shear residual stress on the pipe or tube inner surface is 300 MPa or less,
   in a steel microstructure at a wall thickness center of the base metal portion, a total volume fraction of ferrite and bainite is 90 % or more and an average crystal grain size at the wall thickness center is 9.0 $\mu$m or less, and
   in a steel microstructure at a position 0.1 mm radially outward from the pipe or tube inner surface of the base metal portion, a total volume fraction of ferrite and bainite is 95 % or more.

2. The electric resistance welded steel pipe or tube according to claim 1, wherein a chemical composition of the base metal portion contains, in mass%,

C: 0.020 % or more and 0.150 % or less,
Si: 0.01 % or more and 0.50 % or less,
Mn: 0.30 % or more and 2.00 % or less,
P: 0.050 % or less,
S: 0.0200 % or less,
Al: 0.005 % or more and 0.100 % or less, and
N: 0.0100 % or less,
with a balance consisting of Fe and inevitable impurities.

3. The electric resistance welded steel pipe or tube according to claim 2, wherein the chemical composition further contains, in mass%, one or more selected from

Nb: 0.100 % or less,
V: 0.100 % or less,
Ti: 0.150 % or less,
Cr: 1.00 % or less,
Mo: 1.00 % or less,
Cu: 1.00 % or less,
Ni: 1.00 % or less,
Ca: 0.0100 % or less, and
B: 0.0100 % or less.

4. A production method for the electric resistance welded steel pipe or tube according to any one of claims 1 to 3, the production method comprising:

heating a steel material to a heating temperature of 1100 °C or more and 1300 °C or less and then subjecting the steel material to hot rolling with a rolling finish temperature of 750 °C or more and 850 °C or less;
thereafter performing cooling with an average cooling rate at a sheet thickness center of 10 °C/s or more and 60 °C/s or less, a cooling stop temperature at the sheet thickness center of 450 °C or more and 650 °C or less, and a cooling stop temperature at a sheet surface of 250 °C or more and 500 °C or less to obtain a hot-rolled steel sheet;
thereafter forming the hot-rolled steel sheet into a cylinder by cold roll forming and butting and electric resistance welding both circumferential ends of the cylinder together;
thereafter obtaining an electric resistance welded steel pipe or tube material using a sizing roll that satisfies the following formula (1); and
thereafter applying an internal pressure p in MPa that satisfies the following formula (2) to an inner surface of the electric resistance welded steel pipe or tube material to obtain an electric resistance welded steel pipe or tube, (a diameter in mm of the sizing roll) $\geq$ (a sheet thickness in mm of the hot-rolled steel sheet)/0.020 ...     (1)

$$X < p \leq X \times 1.5 \qquad \qquad \dots (2)$$

where X = ((a wall thickness in mm of the electric resistance welded steel pipe or tube material)/(a radius in mm of the electric resistance welded steel pipe or tube material)) $\times$ (a yield stress in MPa of the electric resistance welded steel pipe or tube material).

## INTERNATIONAL SEARCH REPORT

| International application No. |
|---|
| **PCT/JP2023/019003** |

**A.    CLASSIFICATION OF SUBJECT MATTER**

*C21D 8/02*(2006.01)i; *C22C 38/00*(2006.01)i; *C22C 38/06*(2006.01)i; *C22C 38/58*(2006.01)i; *B21B 1/22*(2006.01)i; *B21C 37/08*(2006.01)i; *B21C 37/30*(2006.01)i
FI:    C22C38/00 301Z; C21D8/02 C; C22C38/06; C22C38/58; B21C37/08 A; B21C37/30; B21B1/22 M

According to International Patent Classification (IPC) or to both national classification and IPC

**B.    FIELDS SEARCHED**

Minimum documentation searched (classification system followed by classification symbols)
C21D8/02; C21D8/10; C22C38/00-C22C38/60; B21B1/22; B21C37/08; B21C37/30

Documentation searched other than minimum documentation to the extent that such documents are included in the fields searched
Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2021/200402 A1 (JFE STEEL CORP) 07 October 2021 (2021-10-07)<br>entire text, all drawings | 1-4 |
| A | WO 2021/085036 A1 (JFE STEEL CORP) 06 May 2021 (2021-05-06)<br>entire text, all drawings | 1-4 |
| A | JP 2010-37612 A (JFE STEEL CORP) 18 February 2010 (2010-02-18)<br>entire text, all drawings | 1-4 |
| A | CN 105734444 A (BAOJI PETROLEUM STEEL PIPE CO., LTD.) 06 July 2016<br>(2016-07-06)<br>entire text, all drawings | 1-4 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **01 August 2023** | **08 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/019003**

| Patent document cited in search report | | | Publication date (day/month/year) | Patent family member(s) | | | Publication date (day/month/year) |
|---|---|---|---|---|---|---|---|
| WO | 2021/200402 | A1 | 07 October 2021 | EP | 4095280 | A1 | |
| | | | | entire text, all drawings | | | |
| | | | | TW | 202146674 | A | |
| | | | | KR | 10-2022-0145392 | A | |
| | | | | CN | 115362273 | A | |
| | | | | CA | 3174757 | A1 | |
| WO | 2021/085036 | A1 | 06 May 2021 | US | 2022/0373108 | A1 | |
| | | | | entire text, all drawings | | | |
| | | | | EP | 4036256 | A1 | |
| | | | | TW | 202122601 | A | |
| | | | | CN | 114599812 | A | |
| | | | | KR | 10-2022-0069995 | A | |
| | | | | CA | 3159223 | A1 | |
| JP | 2010-37612 | A | 18 February 2010 | (Family: none) | | | |
| CN | 105734444 | A | 06 July 2016 | (Family: none) | | | |

Form PCT/ISA/210 (patent family annex) (January 2015)

**REFERENCES CITED IN THE DESCRIPTION**

**Patent documents cited in the description**

- JP 6521197 B

- JP 2017179482 A